# FASCICULE DE BREVET EUROPEEN

(11) **EP 4 374 103 B1**
(45) Date de publication et mention de la délivrance du brevet: **12.02.2025**
(21) Numéro de dépôt: 22733088.3
(22) Date de dépôt: 14.06.2022
(51) Int. Cl.: F17C 5/02

(54) **INSTALLATION ET PROCÉDÉ DE DISTRIBUTION D'HYDROGÈNE LIQUÉFIÉ**
ANLAGE UND VERFAHREN ZUR VERTEILUNG VON VERFLÜSSIGTEM WASSERSTOFF
FACILITY AND METHOD FOR DISTRIBUTING LIQUEFIED HYDROGEN

(30) Priorité: 19.07.2021 FR 2107747
(43) Date de publication de la demande: 29.05.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ALLIDIERES, Laurent, 75321 PARIS (FR); GIRARD, Claire, 78350 LES LOGES-EN-JOSAS (FR); RIGOUT, Grégoire, 78350 LES LOGES-EN-JOSAS (FR); GUENEGO, Bertille, 94503 CHAMPIGNY-SUR-MARNE (FR)
(74) Mandataire: Air Liquide
(86) Numéro de dépôt international: PCT/EP2022/066130
(87) Numéro de publication internationale: WO 2023/001457

(56) Documents cités:
- DE-A1- 102010 047 300
- FR-A1- 3 086 993
- FR-A1- 3 088 415
- FR-B1- 3 080 906

## Description

L'invention concerne une installation et un procédé de distribution d'hydrogène liquéfié

FR3088415A1 divulgue une telle installation.

L'invention concerne plus particulièrement une installation de distribution d'hydrogène liquéfié comprenant une source d'hydrogène gazeux, un liquéfacteur, au moins un stockage d'hydrogène liquide, le liquéfacteur comprenant une entrée raccordée à la source et une sortie raccordée à une entrée du stockage via un circuit de liquide pour y stocker de l'hydrogène liquéfié produit par le liquéfacteur, l'installation comprenant un circuit de remplissage de liquide muni d'une première extrémité raccordée au stockage et une seconde extrémité destinée à être raccordée de façon amovible à une première extrémité d'un réservoir de liquide mobile à remplir tel qu'un semi-remorque, l'installation comprenant en outre un circuit de récupération de gaz muni d'une première extrémité destinée à être raccordée de façon amovible à une seconde extrémité dudit réservoir et une seconde extrémité raccordée à un organe récepteur de l'installation, notamment une entrée du liquéfacteur, le circuit de récupération de gaz comprenant un organe de régulation de pression et/ou de débit, tel qu'une vanne permettant de baisser la pression dans le réservoir de liquide mobile à une pression de remplissage déterminée, l'installation comprenant un organe électronique de contrôle comprenant un microprocesseur configuré pour piloter tout ou partie de l'installation, l'organe électronique de contrôle étant configuré pour recevoir au moins un signal de demande de remplissage d'un réservoir de liquide mobile.

Un liquéfacteur d'hydrogène est généralement configuré pour fonctionner à charge nominale et produire de l'hydrogène liquide à une température donnée. L'hydrogène liquide produit est stocké dans un ou plusieurs stockages à partir desquels on remplit des réservoirs mobiles (semi-remorques).

Le stockage du liquéfacteur et la procédure de chargement associée pour remplir les remorques à partir du stockage sont également conçus pour fonctionner à des conditions de fonctionnement fixes. En effet, tous ces paramètres sont généralement optimisés lors de la phase de conception. Puis pendant la phase d'exploitation, ces paramètres restent les mêmes, quels que soient la remorque à remplir et les clients à livrer.

Cependant, généralement plusieurs clients (points de réception) doivent être livrés avec de l'hydrogène liquide à partir de cette installation, avec des logistiques différentes et des attentes différentes (hydrogène plus ou moins dense ou froid).

Pour cela, le point nominal de production de l'hydrogène liquéfié est fixé au niveau nécessaire pour satisfaire le client le plus exigeant. De ce fait, l'installation gaspille une partie de son énergie à produire de l'hydrogène en « sur-qualité » pour certains utilisateurs.

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement caractérisée en ce que l'organe de régulation de pression et/ou de débit est réglable et en ce que l'organe électronique de contrôle est configuré pour piloter ce dernier pour réguler le niveau de pression dans un réservoir de liquide mobile à une pression de remplissage déterminée en fonction d'un signal de demande de remplissage reçu.

L'invention permet de remplir des réservoirs à la pression qui est optimale et permettant de répondre aux attentes des clients pour la livraison, sans production excessive de gaz de vaporisation lors du remplissage.

Au contraire, selon les solutions connues, une pression trop basse était imposée dans le réservoir mobile pour certaines livraisons. Il s'agit un effort énergétique non valorisé et coûteux pour l'installation. Ceci génère en effet plus de gaz flash que pour une pression plus élevée. Ce gaz flash généré lors d'un remplissage d'un réservoir à relative basse pression n'est pas transporté. Ce gaz est soit mis à l'air soit reliquéfié dans le liquéfacteur. En revanche, si le réservoir part avec une pression trop basse, du liquide supplémentaire va être évaporé pour le pressuriser aux stations (augmentant les boil-off gazeux).

Par ailleurs, des modes de réalisation de l'invention peuvent comporter l'une ou plusieurs des caractéristiques suivantes :
- le circuit de récupération de gaz comprend un organe de compression disposé entre l'organe de régulation de pression et/ou de débit et la seconde extrémité raccordée au liquéfacteur, l'organe de compression étant configuré pour comprimer le flux de gaz provenant de la première extrémité à une pression déterminée en vue de sa réinjection dans le circuit du liquéfacteur,
- la pression de remplissage déterminée est choisie entre une pression minimale déterminée et une pression maximale déterminée,
- la pression minimale (Pmini) déterminée est égale à 1,05 bar,
- l'organe de compression est configuré pour fonctionner avec une pression minimale d'admission en entrée dudit organe de compression, la pression minimale (Pmini) déterminée étant égale à la pression minimale d'admission de l'organe de compression augmentée d'une valeur déterminée correspondant au moins à la perte de charge dans le circuit de récupération de gaz entre la première extrémité et l'entrée dudit organe de compression,
- la pression maximale déterminée est égale à la valeur de la pression au sein du stockage éventuellement diminuée de la valeur de la perte de charge entre le stockage et la seconde extrémité du circuit de remplissage de liquide,l'organe électronique de contrôle est configuré pour recevoir au moins un signal de demande de remplissage d'un réservoir de liquide mobile comprenant au moins l'un des paramètres de remplissage suivants : niveau de pression maximal admis dans le réservoir, niveau de pression de fluide requis au(x) point(s) de réception que le réservoir devra livrer en hydrogène liquéfié après remplissage, quantité d'hydrogène liquéfié à remplir dans le réservoir, distance que le réservoir devra parcourir après remplissage pour livrer à son tour en hydrogène liquéfié au(x) point(s)s de réception, nombre de points de réception que le réservoir devra livrer en hydrogène liquéfié après remplissage, la température dans le stockage, le volume du réservoir; l'organe électronique de contrôle étant configuré pour calculer le niveau de pression de remplissage déterminée en fonction du ou desdits paramètres,
- le liquéfacteur est du type à puissance de refroidissement variable pilotée, c'est-à-dire permettant de varier la température de l'hydrogène liquide produit et notamment de produire de l'hydrogène liquide sous-refroidi par rapport à son état saturé, l'organe électronique de contrôle est configuré pour piloter le niveau de température de l'hydrogène liquide produite dans le stockage en fonction du signal de demande reçu,
- le circuit de remplissage de liquide comprend deux conduites de soutirage reliées à deux hauteurs distinctes du stockage pour y soutirer de l'hydrogène à des conditions thermodynamiques respectives distinctes,
- l'installation comporte deux stockages distincts remplis à des températures d'hydrogène liquide différentes, la première extrémité du circuit de remplissage de liquide étant reliée aux stockages, le circuit de remplissage de liquide comprenant un ensemble de vanne(s) configuré pour permettre de remplir un réservoir avec un mélange de liquide provenant des stockages pour obtenir une température de liquide déterminée.

L'invention concerne également un procédé de distribution d'hydrogène liquéfié utilisant une installation conforme à l'une quelconque des caractéristiques ci-dessus ou ci-dessous, comprenant une étape de génération d'un signal de demande de remplissage d'un réservoir de liquide mobile, une étape de calcul d'un niveau de pression de remplissage déterminé en fonction dudit signal et une étape de remplissage du réservoir avec de l'hydrogène liquide au niveau de pression de remplissage déterminé.

Selon d'autres caractéristiques possibles :
- le niveau de pression de remplissage déterminé est régulé lors de l'étape de remplissage en pilotant l'ouverture de l'organe de régulation de pression et/ou de débit,
- le pilotage de l'ouverture de l'organe de régulation de pression et/ou de débit est réalisé lors d'une opération de dégazage du réservoir pendant et/ou préalablement et/ou suite à un transfert d'hydrogène liquide dans le réservoir,
- l'étape de génération d'un signal de demande de remplissage est réalisé manuellement et/ou par télémétrie, ledit signal étant transmis à l'installation,
- le procédé comporte, préalablement à un transfert d'hydrogène liquide dans le réservoir à partir du stockage, une étape de calcul d'une valeur de température déterminée d'hydrogène liquéfié produit dans le stockage en fonction dudit signal et une étape de remplissage du stockage avec de l'hydrogène liquéfié à ladite température déterminée,
- le procédé comporte, préalablement à un transfert d'hydrogène liquide dans le réservoir à partir du stockage, une étape de remplissage de deux stockages distincts avec de l'hydrogène liquéfié à des températures distinctes et une étape de calcul d'une valeur de température d'hydrogène liquéfié déterminée en fonction dudit signal et une étape de remplissage d'un réservoir à ladite température déterminée via un mélange d'hydrogène liquéfié provenant desdits stockages.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig.1] représente une vue schématique et partielle illustrant un exemple de structure et de fonctionnement d'un exemple de réalisation d'une installation de distribution d'hydrogène liquéfié selon l'invention,
[Fig.2] représente un détail d'une telle installation dans une première variante de réalisation avec contrôle de la température de l'hydrogène liquide produit et stocké,
[Fig.3] représente un détail d'une telle installation dans une seconde variante de réalisation avec soutirage de liquide à différents niveaux du stockage,
[Fig.4] représente un détail d'une telle installation dans une troisième variante de réalisation avec plusieurs stockages.

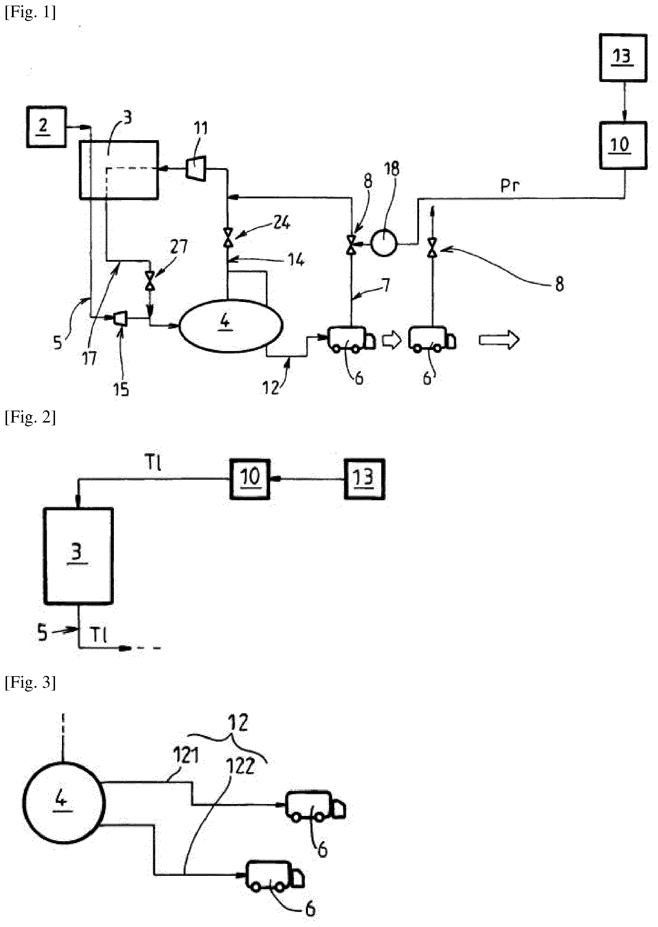

L'installation 1 de distribution d'hydrogène liquéfié représenté à la [Fig.1] comprend une source 2 d'hydrogène gazeux, un liquéfacteur 3 et au moins un stockage 4 d'hydrogène liquide.

La source 2 peut comprendre un réseau de fourniture d'hydrogène et/ou un équipement de production d'hydrogène tel qu'un électrolyseur par exemple.

Le liquéfacteur 3 est par exemple un liquéfacteur utilisant un gaz de cycle (comprenant par exemple de l'hydrogène et/ou de l'hélium) qui subit un cycle thermodynamique produisant à une extrémité du cycle du froid qui est mis en échange thermique avec un flux d'hydrogène à refroidir en vue de sa liquéfaction.

Le liquéfacteur 3 comprend donc une entrée raccordée à la source 2 et une sortie raccordée à une entrée du stockage 4 via un circuit 5 de liquide pour y stocker de l'hydrogène liquéfié produit par le liquéfacteur 3.

L'installation 1 comprend en outre un circuit 12 de remplissage de liquide muni d'une première extrémité raccordée au fond du stockage 4 et une seconde extrémité destinée à être raccordée de façon amovible à une première extrémité d'un réservoir 6 de liquide mobile à remplir tel qu'un semi-remorque pour y transférer de l'hydrogène liquide.

L'installation 1 comprend en outre un circuit 7 de récupération de gaz (gaz de vaporisation contenus dans les réservoirs 6 à remplir) muni d'une première extrémité destinée à être raccordée de façon amovible à une seconde extrémité dudit stockage 4 (typiquement l'extrémité supérieure) et une seconde extrémité raccordée à un organe récepteur de l'installation 1.

Le circuit 7 de récupération de gaz comprend un organe 8 de régulation de pression et/ou de débit, tel qu'une vanne permettant de baisser la pression dans réservoir 6 de liquide mobile à une pression de remplissage Pr déterminée. Cet organe 8 de régulation de pression et/ou de débit est réglable, c'est-à-dire qu'il permet de fixer le niveau de pression résiduel dans le réservoir 6 (dégazage contrôlé).

Par exemple, la seconde extrémité est raccordée à une entrée du liquéfacteur 3 pour récupérer l'hydrogène gazeux dans le circuit du liquéfacteur pour être liquéfié.

A cet effet, le circuit 7 de récupération de gaz comprend de préférence un organe de compression 11 tel qu'un compresseur par exemple (ou unité de compression) disposé entre l'organe 8 de régulation de pression et/ou de débit. Ainsi, le compresseur 11 peut être configuré pour comprimer le flux de gaz provenant de la première extrémité à une pression déterminée en vue de sa réinjection par exemple dans le circuit d'hydrogène à liquéfier du liquéfacteur 3.

Comme illustré, en aval du compresseur 11, le flux de gaz de vaporisation récupéré peut être admis à circuler par exemple dans un passage d'un ensemble d'échangeur(s) de refroidissement du liquéfacteur 3 qui est distinct du circuit 5 principal de liquéfaction de l'hydrogène fourni par la source. C'est-à-dire que le flux de gaz de vaporisation peut être liquéfié de façon distincte du flux principal d'hydrogène. Ce gaz de vaporisation récupéré et refroidi peut être transporté en sortie du liquéfacteur 3 dans une conduite 17 (éventuellement munie d'une vanne 27) qui peut venir se raccorder au circuit 5 de liquide (en sortie du liquéfacteur, par exemple dans ou juste avant l'entrée dans le stockage 4). Comme illustré, ce gaz refroidi (et le cas échéant au moins partiellement liquéfié) peut être mélangé à l'hydrogène liquide du circuit 5 de liquide, par exemple en aval d'un organe 15 de détente finale (par exemple une turbine et/ou une vanne) du circuit 5 de liquide.

Comme illustré également, une extrémité supérieure du stockage 4 peut être reliée à l'entrée du compresseur 11 via une conduite 14 munie de préférence d'une vanne 24. Ceci permet le cas échéant de récupérer également le gaz de vaporisation du stockage 4 dans le compresseur en vue de son recyclage et de sa liquéfaction.

L'installation 1 peut comprendre un ensemble de vannes(s) et d'organes appropriés non représentés par soucis de simplification.

L'installation 1 comprend un organe 10 électronique de contrôle comprenant un microprocesseur (par exemple un ordinateur ou un calculateur électronique programmable) configuré pour piloter tout ou partie l'installation 1. Cet organe 10 de contrôle peut être logé dans l'installation 1 et/ou distant et composé d'un ou plusieurs organes électroniques.

Cet organe 10 électronique de contrôle est configuré pour recevoir au moins un signal 13 de demande de remplissage d'un réservoir 6 de liquide mobile à remplir.

L'organe 10 électronique de contrôle est configuré pour piloter l'organe 8 de régulation de pression et/ou de débit pour réguler le niveau de pression dans un réservoir 6 de liquide mobile rempli à une pression de remplissage Pr déterminée en fonction du signal 13 de demande reçu. Ceci permet d'ajuster la pression du réservoir 6 qui va être rempli à la pression optimale compte tenu des besoins et des contraintes du réservoir 6 mobile, notamment en ce qui concerne ses livraisons ultérieures. La pression de remplissage Pr peut ainsi être calculée pour correspondre à l'état thermodynamique optimal afin de ne pas dépasser la limite spécifiée par les clients qui seront livrés en gaz liquéfié par le réservoir 6.

Cette pression de remplissage Pr déterminée est choisie entre une pression minimale Pmini déterminée et une pression maximale déterminée Pmax.

Cette pression minimale Pmini déterminée est par exemple égale à une valeur fixe déterminée, par exemple 1,05 bar notamment dans le cas où une partie du gaz de vaporisation (BOG) peut être ventilée du réservoir 6 (dépressurisation supplémentaire avant le départ du réservoir 6 rempli).

Dans le cas où il y a récupération complète de ce gaz de vaporisation du réservoir 6 au niveau de l'installation 1, cette pression minimale Pmini peut être égale à la pression minimale d'admission de l'unité 11 de compression plus la perte de charge à surmonter par le retour de ce gaz de vaporisation entre le réservoir 6 et l'entrée de l'unité 11 de compression.

La pression maximale déterminée Pmax est égale à la valeur de la pression au sein du stockage 4 éventuellement diminuée de la valeur de la perte de charge entre le stockage 4 et la seconde extrémité du circuit 12 de remplissage de liquide. C'est-à-dire que cette pression maximale déterminée Pmax peut être spécifiée par la pression du stockage 4 de l'installation 1 moins la perte de charge entre le stockage 4 et le réservoir 6 (remorque) si une pompe de transfert n'est pas disponible pour transférer le liquide dans le circuit de remplissage liquide.

Cette pression maximale déterminée Pmax peut être spécifiée par la pression du stockage 4 de l'installation si au contraire une pompe de transfert est disponible dans le circuit de remplissage de liquide.

L'organe 10 électronique de contrôle est donc configuré pour recevoir au moins un signal 13 de demande de remplissage d'un réservoir 6 de liquide mobile qui spécifie au moins un paramètre de remplissage.

Ce signal 13 peut comporter par exemple au moins l'un des paramètres de remplissage suivants : niveau de pression maximal admis dans le réservoir 6, niveau de pression de fluide requis au(x) point(s) de réception que le réservoir 6 devra livrer en hydrogène liquéfié après remplissage, quantité d'hydrogène liquéfié à remplir dans le réservoir 6, distance que le réservoir 6 devra parcourir après remplissage pour livrer à son tour en hydrogène liquéfié au(x) point(s)s de réception, nombre de points de réception que le réservoir 6 devra livrer en hydrogène liquéfié après remplissage, volume du réservoir 6.

L'organe 10 électronique de contrôle est configuré pour calculer le niveau de pression de remplissage Pr déterminée optimal en fonction du ou de ces paramètres.

C'est-à-dire que l'installation 1 optimise et adapte la pression de remplissage du réservoir 6 mobile en fonction du ou des paramètres logistiques clés prévus pour la prochaine livraison, par exemple les distances et les attentes des clients qui devront être livrés en hydrogène liquide.

Cet état de remplissage thermodynamique optimal peut être déterminé automatiquement par un outil programmé.

Par exemple, un client (point de livraison) peut définir une limite de température de remplissage, afin de n'acheter que de l'hydrogène froid à une température déterminée. Au fur et à mesure que la pression saturée (et donc la température) à l'intérieur du réservoir 6 mobile augmente avec la distance parcourue (linéairement pour un niveau de liquide de réservoir 6 spécifié). Le client peut spécifier la température maximale acceptable de livraison de sa station réceptrice.

L'installation 1 peut recevoir également l'information du nombre de stations livrées (le taux d'augmentation de la pression augmente avec le nombre de stations livrées et la diminution du niveau de liquide dans le réservoir 6 mobile de livraison).

L'organe 10 électronique de contrôle est configuré pour calculer le point de remplissage thermodynamique optimal (pression entre Pmin et Pmax) afin de ne pas dépasser la limite spécifiée par le ou les clients.

La transmission de ces informations ou paramètres peut être réalisé manuellement et/ ou via un système de transmission de type télémétrie d'expédition. Par exemple, il y a transmission des données de logistique et du réservoir (remorque) à l'organe 10 électronique de contrôle qui calcule alors la pression optimale de remplissage Pr.

Alternativement, la pression optimale de remplissage du réservoir 6 est transmise par le réservoir 6, par exemple au niveau du quai de chargement, par exemple via l'opérateur en charge du remplissage du réservoir 6.

Plusieurs types de remplissages sont possibles pour atteindre ce point de remplissage thermodynamique optimal calculé.

Par exemple, l'organe 10 électronique de contrôle peut calculer la pression idéale de remplissage du réservoir 6 compte tenu de la prochaine livraison de liquide prévue. La valeur optimale de pression est de préférence la valeur maximale qui doit garantir de répondre à la demande des clients et à la législation routière. Choisir la pression maximale possible au lieu d'une valeur inférieure par défaut (souvent 1,15 bara) permet de limiter la quantité de gaz d'évaporation qui sera produite due au flash lors d'un remplissage du réservoir 6. De plus, ceci facilite le recyclage des gaz d'évaporation (moins de dépressurisation nécessaire).

La pression de remplissage du réservoir 6 peut ainsi être régulée par l'ouverture de l'organe 8 de régulation de pression et/ou de débit (degré d'ouverture et/ou durées d'ouverture) pour abaisser la pression dans le réservoir 6 à remplir relié à l'installation 1.

Dans le cas où l'installation 1 comprendrait plusieurs lignes de remplissage permettant le remplissage simultané de plusieurs réservoir 6 mobile, chacun des organes 8 (vannes par exemple) est de préférence pilotable individuellement.

Par exemple cette ou ces vannes 8 peuvent être du type piloté et/ou automatiques avec point de consigne variable. Ainsi, le niveau de consigne de pression de cet organe 8 peut être piloté par exemple via un contrôle 18 de vanne de type « PIC » (vanne de régulation et d'équilibrage automatique indépendante de la pression). Bien entendu tout autre type de vanne et de contrôle appropriés peuvent être envisagés.

Cette étape de dépressurisation contrôlée du réservoir 6 est de préférence réalisée avant l'étape de remplissage avec du liquide et est réalisée jusqu'à la pression idéale calculée comme expliqué ci-dessus. Ceci permet d'éviter une mise à l'air libre et facilite le recyclage des gaz de vaporisation dans l'installation 1. De plus, l'étape de dépressurisation est écourtée par rapport à l'art antérieur.

En fonction de la fréquence de remplissage prévue des réservoirs 6, de la logistique et du nombre de quais de chargement, l'installation 1 peut comprendre un ou plusieurs circuits 7 de récupération de gaz (lignes de retour isolées thermiquement) vers le liquéfacteur 3.

Par exemple, pour des liquéfacteurs 3 de relativement petite taille ou capacité, un seul réservoir 6 pourrait être dépressurisé/rempli à la fois et une seule ligne 7 de retour de gaz peut être suffisante. En revanche, des lignes 7 de retour de gaz distinctes peuvent être envisagées si plusieurs remplissages de réservoirs 6 sont possibles (potentiellement à différents points de remplissage thermodynamique optimaux).

Le point de consigne du remplissage du réservoir 6 influencera donc la consigne de pression de la conduite 7 de retour associée. Plusieurs lignes de retour peuvent bénéficier de la même isolation thermique.

Dans le cas où les conditions de livraison attendues sont homogènes pendant une période relativement longue (par exemples plusieurs jours et notamment plus de 15 jours), l'installation 1 peut être configurée pour modifier la pression déterminée dans le stockage 4 recevant du liquide du liquéfacteur 3. Ceci permet également, si besoin, d'adapter l'installation 1 à la pression optimale pour remplir le réservoir 6.

Si une pompe de remplissage est disponible dans le circuit 12 de remplissage liquide, cette pression cible du stockage 4 est de préférence égale à la pression de remplissage du réservoir 6.

Dans le cas où le remplissage du réservoir 6 est réalisé sans pompe, une différence de pression suffisante entre le stockage 4 et le réservoir 6 est maintenue pour surmonter la perte de charge de la tuyauterie du circuit 12 de remplissage et maintenir le débit de remplissage de liquide souhaité. Cette différence de pression peut être comprise entre 100 mbar et 500 mbar, et plus préférentiellement entre 200 mbar et 300 mbar (par exemple selon la longueur et le diamètre de la tuyauterie du circuit 12).

De préférence, le système de gestion de l'évaporation doit être flexible afin de valoriser une pression d'ébullition plus élevée.

Ainsi, bien que de structure simple et peu couteuse, l'invention permet une optimisation de l'ensemble de la chaîne depuis le liquéfacteur 3 jusqu'à la station receveuse livrée en gaz liquéfié par le réservoir 6 mobile. L'invention permet d'adapter le remplissage des réservoirs 6 (remorques) aux conditions thermodynamiques optimales, afin de répondre au(x) client(s) finaux livrés en liquide tout en minimisant le coût de l'installation 1 (en évitant notamment une puissance de liquéfaction et de refroidissement inutile).

L'installation et le procédé permettent des remplissages de réservoirs 6 de livraison de liquide cryogénique pour une chaîne logistique optimale (notamment minimisation du gaz de vaporisation pendant le remplissage du réservoir 6).

De plus, comme décrit ci-dessus, les conditions thermodynamiques (par exemple pression et/ou température) dans le stockage 4 peuvent être régulées en tenant compte des livraisons suivantes.

Comme illustré schématiquement à la [Fig.2], dans le cas d'un liquéfacteur 3 du type capable de produire de l'hydrogène liquéfié sous-refroidi et flexible il est possible de piloter en plus l'installation 1 en modifiant la température Tl du liquide produit en fonction du ou des paramètres précités.

Par exemple, dans le cas où l'installation 1 comprend un seul stockage 4 disponible, pour une pression de remplissage du réservoir 6 donnée (par exemple entre 1,15 bara et 2 bara, et de préférence entre 1,15 et 1,5 bara), la température de l'hydrogène liquéfié aura un impact sur la pression résultante lorsque le réservoir 6 est déplacé.

En effet, un réservoir 6 rempli d'hydrogène liquide sous-refroidi atteindra l'équilibre lors de son déplacement et la pression chutera jusqu'à la pression de saturation. La température optimale de l'hydrogène liquide entrant dans le réservoir 6 peut également être déterminée par l'organe 10 électronique de contrôle programmé. La température de l'hydrogène liquéfié produit (sous-refroidi ou non) peut être ajustée en tenant compte également des paramètres de la demande de remplissage (prochaine (s) livraison (s)) et injectée dans le fond du stockage 6. En effet, le l'hydrogène sous-refroidi sera stocké en fond de stockage 6 grâce à la stratification de l'hydrogène en son sein.

Ainsi, par exemple, si des clients attendent de l'hydrogène liquide de relative haute qualité, la quantité nécessaire d'hydrogène sous-refroidie doit être produite et injectée dans le fond. En revanche, pour ses clients moins exigeants, la production d'hydrogène liquide saturé peut suffire à répondre aux attentes.

Le débit de remplissage du réservoir 6 est généralement supérieur au débit de remplissage du stockage 4. Ainsi il est préférable d'anticiper le remplissage du stockage 4, notamment en terme de température.

Le fond du stockage 4 est donc rempli de préférence à l'avance du remplissage de réservoirs 6 avec de l'hydrogène liquide sous-refroidi. A la fin du remplissage du stockage 4, la quantité d'hydrogène sous-refroidie produite et envoyée au fond de stockage 4 doit correspondre au moins à la masse qui sera remplie dans le réservoir 6. Cette masse pourrait être optimisée pour compenser également l'entrée de chaleur des lignes du circuit. Sur la base du débit de production d'hydrogène liquéfié (qui peut varier en température) et de la masse attendue dans le réservoir 6 à remplir, l'installation 1 (par exemple l'organe 10) peut être configuré(e) pour déterminer par exemple l'heure et la durée de démarrage de la production d'hydrogène sous-refroidie optimisée.

Comme illustré schématiquement à la [Fig.3], pour une production d'hydrogène sous-refroidi moins variable, le circuit 12 de remplissage de liquide peut comporter un ou plusieurs autres sorties du stockage 6 reliées à des hauteurs différentes du stockage 6 via des lignes 121, 122 distinctes. Ceci peut permettre de soutirer du liquide du stockage 6 en tirant bénéfice de la stratification de l'hydrogène dans le stockage 4 (l'hydrogène sous-refroidi se trouvant en partie inférieure tandis que l'hydrogène saturé se trouvant en partie supérieure à proximité de l'interface liquide/gaz).

Par exemple, si la température optimale requise pour le remplissage est la température de saturation, la sortie de stockage intermédiaire 121 peut être utilisée pour soutirer le liquide. Les sorties peuvent être reliées va des lignes indépendantes (et/ou se raccorder à une conduite commune).

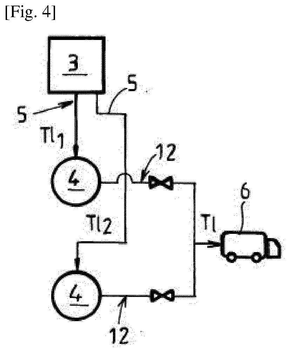

Comme illustré schématiquement à la [Fig.4], dans le cas où deux (ou plus) stockages 4 sont disponibles dans l'installation 1, un des stockages 4 peut être rempli avec de l'hydrogène saturé à la température saturée Tl1 tandis qu'un autre stockage 4 peut être rempli avec de l'hydrogène liquide sous-refroidi (température Tl2).

L'organe 10 électronique de contrôle peut être configuré (programmé) pour déterminer le mélange d'hydrogène adéquat à partir de ces stockages 4 pour remplir un réservoir 6 à la température optimale cible. La régulation peut être obtenue par un ensemble de vanne(s) de contrôle contrôlant les flux soutirés des stockages 6.

Le stockage 4 contenant du liquide sous-refroidi peut être utilisé pour compenser les pertes de flash et de refroidissement, et pourrait être utilisé pour remplir un réservoir 6 avec de l'hydrogène très froid si nécessaire pour atteindre le point de remplissage thermodynamique optimal requis.

Ainsi, l'installation 1 permet dans cette variante de produire de l'hydrogène sous-refroidi à température et quantité optimisées. Cet hydrogène peut être stocké dans le fond d'un stockage 4 pour être utilisé pour remplir un réservoir 6 afin d'atteindre le point de remplissage thermodynamique optimal.

Le remplissage de réservoir 6 peut être réalisé par pompage actif et/ou simple mise en relation passive avec différentiel de pression.

Ainsi, l'installation 1 permet, via l'ouverture contrôlée de l'organe 8 de régulation de pression, d'amener le réservoir à la pression de remplissage en vue de son remplissage avec du liquide. Après remplissage, cette organe 8 de régulation de pression (qui peut faire partie du réservoir 6 mobile), peut être ouvert pour dépressuriser encore ce réservoir 6 jusqu'à une seconde pression plus basse et adaptée au transport ou à la livraison par exemple.

## Revendications

1. Installation de distribution d'hydrogène liquéfié comprenant une source (2) d'hydrogène gazeux, un liquéfacteur (3), au moins un stockage (4) d'hydrogène liquide, le liquéfacteur (3) comprenant une entrée raccordée à la source (2) et une sortie raccordée à une entrée du stockage (4) via un circuit (5) de liquide pour y stocker de l'hydrogène liquéfié produit par le liquéfacteur (3), l'installation (1) comprenant un circuit (12) de remplissage de liquide muni d'une première extrémité raccordée au stockage (4) et une seconde extrémité destinée à être raccordée de façon amovible à une première extrémité d'un réservoir (6) de liquide mobile à remplir tel qu'un semi-remorque, l'installation (1) comprenant en outre un circuit (7) de récupération de gaz muni d'une première extrémité destinée à être raccordée de façon amovible à une seconde extrémité dudit réservoir (6) et une seconde extrémité raccordée à un organe récepteur de l'installation (1), par exemple une entrée du liquéfacteur (3), le circuit (7) de récupération de gaz comprenant un organe (8) de régulation de pression et/ou de débit, tel qu'une vanne permettant de baisser la pression dans le réservoir (6) de liquide mobile à une pression de remplissage (Pr) déterminée, l'installation (1) comprenant un organe (10) électronique de contrôle comprenant un microprocesseur configuré pour piloter tout ou partie de l'installation (1), l'organe (10) électronique de contrôle étant configuré pour recevoir au moins un signal (13) de demande de remplissage d'un réservoir (6) de liquide mobile, l'installation (1) étant **caractérisée en ce que** l'organe (8) de régulation de pression et/ou de débit est réglable et **en ce que** l'organe (10) électronique de contrôle est configuré pour piloter ce dernier pour réguler le niveau de pression dans un réservoir (6) de liquide mobile à une pression de remplissage (Pr) déterminée en fonction d'un signal (13) de demande de remplissage reçu.

2. Installation selon la revendication 1, **caractérisée en ce que** le circuit (7) de récupération de gaz comprend un organe (11) de compression disposé entre l'organe (8) de régulation de pression et/ou de débit et la seconde extrémité raccordée au liquéfacteur, l'organe (11) de compression étant configuré pour comprimer le flux de gaz provenant de la première extrémité à une pression déterminée en vue de sa réinjection dans le circuit du liquéfacteur (3).

3. Installation selon la revendication 1 ou 2, **caractérisée en ce que** la pression de remplissage (Pr) déterminée est choisie entre une pression minimale (Pmini) déterminée et une pression maximale déterminée (Pmax).

4. Installation selon la revendication 3, **caractérisée en ce que** la pression minimale (Pmini) déterminée est égale à 1,05 bar.

5. Installation selon les revendications 2 et 3, **caractérisée en ce que** l'organe (11) de compression (11) est configuré pour fonctionner avec une pression minimale d'admission en entrée dudit organe (11) de compression , la pression minimale (Pmini) déterminée étant égale à la pression minimale d'admission de l'organe (11) de compression augmentée d'une valeur déterminée correspondant au moins à la perte de charge dans le circuit (7) de récupération de gaz entre la première extrémité et l'entrée dudit organe (11) de compression.

6. Installation selon l'une quelconque des revendications 3 à 5, **caractérisée en ce que** la pression maximale déterminée (Pmax) est égale à la valeur de la pression au sein du stockage (4) éventuellement diminuée de la valeur de la perte de charge entre le stockage (4) et la seconde extrémité du circuit (12) de remplissage de liquide.

7. Installation selon l'une quelconque des revendications 1 à 6, **caractérisée en ce que** l'organe (10) électronique de contrôle est configuré pour recevoir au moins un signal (13) de demande de remplissage d'un réservoir (6) de liquide mobile comprenant au moins l'un des paramètres de remplissage suivants : niveau de pression maximal admis dans le réservoir (6), niveau de pression de fluide requis au(x) point(s) de réception que le réservoir (6) devra livrer en hydrogène liquéfié après remplissage, quantité d'hydrogène liquéfié à remplir dans le réservoir (6), distance que le réservoir (6) devra parcourir après remplissage pour livrer à son tour en hydrogène liquéfié au(x) point(s)s de réception, nombre de points de réception que le réservoir (6) devra livrer en hydrogène liquéfié après remplissage, la température dans le stockage (4), le volume du réservoir (6); et **en ce que** l'organe (10) électronique de contrôle est configuré pour calculer le niveau de pression de remplissage (Pr) déterminée en fonction du ou desdits paramètres.

8. Installation selon l'une quelconque des revendications 1 à 7, **caractérisée en ce que** le liquéfacteur (3) est du type à puissance de refroidissement variable pilotée, c'est-à-dire permettant de varier la température (Tl) de l'hydrogène liquide produit et notamment de produire de l'hydrogène liquide sous-refroidi par rapport à son état saturé, et **en ce que** l'organe (10) électronique de contrôle est configuré pour piloter le niveau de température de l'hydrogène liquide produite dans le stockage (4) en fonction du signal de demande reçu.

9. Installation selon la revendications 8, **caractérisée en ce que** le circuit (12) de remplissage de liquide comprend deux conduites (121, 122) de soutirage reliées à deux hauteurs distinctes du stockage pour y soutirer de l'hydrogène à des conditions thermodynamiques respectives distinctes.

10. Installation selon la revendications 8 ou 9, **caractérisée en ce qu'**il comporte deux stockages (4) distincts remplis à des températures d'hydrogène liquide différentes, la première extrémité du circuit de remplissage de liquide étant reliée aux stockages, le circuit de remplissage de liquide comprenant un ensemble de vanne(s) configuré pour permettre de remplir un réservoir (6) avec un mélange de liquide provenant des stockages (4) pour obtenir une température de liquide déterminée.

11. Procédé de distribution d'hydrogène liquéfié utilisant une installation conforme à l'une quelconque des revendications 1 à 10, comprenant une étape de génération d'un signal (13) de demande de remplissage d'un réservoir (6) de liquide mobile, une étape de calcul d'un niveau de pression de remplissage (Pr) déterminé en fonction dudit signal et une étape de remplissage du réservoir (6) avec de l'hydrogène liquide au niveau de pression de remplissage (Pr) déterminé.

12. Procédé selon la revendication 11, **caractérisé en ce que** le niveau de pression de remplissage (Pr) déterminé est régulé lors de l'étape de remplissage en pilotant l'ouverture de l'organe (8) de régulation de pression et/ou de débit.

13. Procédé selon la revendication 12, **caractérisé en ce que** le pilotage de l'ouverture de l'organe (8) de régulation de pression et/ou de débit est réalisé lors d'une opération de dégazage du réservoir (6) pendant et/ou préalablement et/ou suite à un transfert d'hydrogène liquide dans le réservoir (6).

14. Procédé selon l'une quelconque des revendications 11 à 13, **caractérisé en ce que** l'étape de génération d'un signal (13) de demande de remplissage est réalisé manuellement et/ou par télémétrie, ledit signal étant transmis à l'installation (1).

15. Procédé selon l'une quelconque des revendications 11 à 14, **caractérisé en ce qu'**il comporte, préalablement à un transfert d'hydrogène liquide dans le réservoir (6) à partir du stockage (4), une étape de calcul d'une valeur de température (Tl) déterminée d'hydrogène liquéfié produit dans le stockage (4) en fonction dudit signal (13) et une étape de remplissage du stockage (4) avec de l'hydrogène liquéfié à ladite température (Tl) déterminée.

16. Procédé selon l'une quelconque des revendications 11 à 15, **caractérisé en ce qu'**il comporte, préalablement à un transfert d'hydrogène liquide dans le réservoir (6) à partir du stockage (4), une étape de remplissage de deux stockages (4) distincts avec de l'hydrogène liquéfié à des températures distinctes (Tl1, Tl2) et une étape de calcul d'une valeur de température d'hydrogène liquéfié déterminée (Tl) en fonction dudit signal et une étape de remplissage d'un réservoir (6) à ladite température déterminée via un mélange d'hydrogène liquéfié provenant desdits stockages (4).

## Patentansprüche

1. Anlage zur Verteilung von verflüssigtem Wasserstoff, umfassend eine Quelle (2) für gasförmigen Wasserstoff, einen Verflüssiger (3), mindestens einen Speicher (4) für flüssigen Wasserstoff, wobei der Verflüssiger (3) einen Einlass, der an die Quelle (2) angeschlossen ist, und einen Auslass, der über einen Flüssigkeitskreis (5) an einen Einlass des Speichers (4) angeschlossen ist, um darin von dem Verflüssiger (3) produzierten verflüssigten Wasserstoff zu speichern, umfasst, wobei die Anlage (1) einen Flüssigkeitsfüllkreis (12) umfasst, der mit einem ersten Ende versehen ist, das an den Speicher (4) angeschlossen ist, und mit einem zweiten Ende, das dazu bestimmt ist, lösbar an ein erstes Ende eines zu füllenden mobilen Flüssigkeitstanks (6) wie eines Aufliegers angeschlossen zu werden, wobei die Anlage (1) ferner einen Gasrückführkreis (7) umfasst, der mit einem ersten Ende versehen ist, das dazu bestimmt ist, lösbar an ein zweites Ende des Tanks (6) angeschlossen zu werden, und mit einem zweiten Ende, das an ein Empfangsorgan der Anlage (1), beispielsweise einen Einlass des Verflüssigers (3), angeschlossen ist, wobei der Gasrückführkreis (7) ein Druck- und/oder Volumenstromregelungsorgan (8) wie ein Ventil umfasst, das es ermöglicht, den Druck in dem mobilen Flüssigkeitstank (6) auf einen bestimmten Fülldruck (Pr) zu senken, wobei die Anlage (1) ein elektronisches Steuerorgan (10) umfasst, das einen Mikroprozessor umfasst, der dazu ausgestaltet ist, die gesamte oder einen Teil der Anlage (1) zu steuern, wobei das elektronische Steuerorgan (10) dazu ausgestaltet ist, mindestens ein Signal (13) zur Anforderung des Füllens eines mobilen Flüssigkeitstanks (6) zu empfangen, wobei die Anlage (1) **dadurch gekennzeichnet ist, dass** das Druck- und/oder Volumenstromregelungsorgan (8) regelbar ist und dass das elektronische Steuerorgan (10) dazu ausgestaltet ist, Letzteres zu steuern, um das Druckniveau in einem mobilen Flüssigkeitstank (6) in Abhängigkeit von einem empfangenen Signal (13) zur Anforderung des Füllens auf einen bestimmten Fülldruck (Pr) zu regeln.

2. Anlage nach Anspruch 1, **dadurch gekennzeichnet, dass** der Gasrückführkreis (7) ein Verdichtungsorgan (11) umfasst, das zwischen dem Druck- und/oder Volumenstromregelungsorgan (8) und dem an den Verflüssiger angeschlossenen zweiten Ende angeordnet ist, wobei das Verdichtungsorgan (11) dazu ausgestaltet ist, den von dem ersten Ende kommenden Gasstrom auf einen bestimmten Druck im Hinblick auf seine Wiedereinleitung in den Kreis des Verflüssigers(3) zu verdichten.

3. Anlage nach Anspruch 1 oder 2, **dadurch gekennzeichnet, dass** der bestimmte Fülldruck (Pr) zwischen einem bestimmten minimalen Druck (Pmini) und einem bestimmten maximalen Druck (Pmax) gewählt wird.

4. Anlage nach Anspruch 3, **dadurch gekennzeichnet, dass** der bestimmte minimale Druck (Pmini) 1,05 bar beträgt.

5. Anlage nach den Ansprüchen 2 und 3, **dadurch gekennzeichnet, dass** das Verdichtungsorgan (11) dazu ausgestaltet ist, mit einem minimalen Einlassdruck im Einlass des Verdichtungsorgans (11) zu arbeiten, wobei der bestimmte minimale Druck (Pmini) gleich dem minimalen Einlassdruck des Verdichtungsorgans (11) zuzüglich eines bestimmten Werts, der mindestens dem Druckverlust in dem Gasrückführkreis (7) zwischen dem ersten Ende und dem Einlass des Verdichtungsorgans (11) entspricht, ist.

6. Anlage nach einem der Ansprüche 3 bis 5, **dadurch gekennzeichnet, dass** der bestimmte maximale Druck (Pmax) gleich dem Wert des Drucks in dem Speicher (4), gegebenenfalls vermindert um den Wert des Druckverlustes zwischen dem Speicher (4) und dem zweiten Ende des Flüssigkeitsfüllkreises (12), ist.

7. Anlage nach einem der Ansprüche 1 bis 6, **dadurch gekennzeichnet, dass** das elektronische Steuerorgan (10) dazu ausgestaltet ist, mindestens ein Signal (13) zur Anforderung des Füllens eines mobilen Flüssigkeitstanks (6) zu empfangen, das mindestens einen der folgenden Füllparameter umfasst: höchstzulässiges Druckniveau in dem Tank (6), gefordertes Fluiddruckniveau an dem(den) Empfangspunkt(en), die der Tank (6) nach dem Füllen mit verflüssigtem Wasserstoff beliefern muss, in den Tank (6) zu füllende Menge verflüssigten Wasserstoffs, Entfernung, die der Tank (6) nach dem Füllen zurücklegen muss, um wiederum verflüssigten Wasserstoff an den(die) Empfangspunkt(e) zu liefern, Anzahl von Empfangspunkten, die der Tank (6) nach dem Füllen mit verflüssigtem Wasserstoff beliefern muss, Temperatur in dem Speicher (4), Volumen des Tanks (6); und dadurch, dass das elektronische Steuerorgan (10) dazu ausgestaltet ist, das bestimmte Fülldruckniveau (Pr) in Abhängigkeit von dem oder den Parametern zu berechnen.

8. Anlage nach einem der Ansprüche 1 bis 7, **dadurch gekennzeichnet, dass** der Verflüssiger (3) vom Typ mit gesteuerter variabler Kühlleistung ist, d. h., es ermöglicht, die Temperatur (Tl) des produzierten flüssigen Wasserstoffs zu variieren und insbesondere in Bezug auf seinen gesättigten Zustand unterkühlten flüssigen Wasserstoff zu produzieren, und dadurch, dass das elektronische Steuerorgan (10) dazu ausgestaltet ist, das Temperaturniveau des produzierten flüssigen Wasserstoffs in dem Speicher (4) in Abhängigkeit von dem empfangenen Anforderungssignal zu steuern.

9. Anlage nach Anspruch 8, **dadurch gekennzeichnet, dass** der Flüssigkeitsfüllkreis (12) zwei Entnahmeleitungen (121, 122) umfasst, die auf zwei verschiedenen Höhen des Speichers angebunden sind, um daraus Wasserstoff mit verschiedenen jeweiligen thermodynamischen Bedingungen zu entnehmen.

10. Anlage nach Anspruch 8 oder 9, **dadurch gekennzeichnet, dass** sie zwei verschiedene Speicher (4) beinhaltet, die mit flüssigem Wasserstoff mit verschiedenen Temperaturen gefüllt sind, wobei das erste Ende des Flüssigkeitsfüllkreises an die Speicher angebunden ist, wobei der Flüssigkeitsfüllkreis eine Anordnung aus einem oder mehreren Ventil(en) umfasst, um es zu ermöglichen, einen Tank (6) mit einem aus den Speichern (4) kommenden Flüssigkeitsgemisch zu füllen, um eine bestimmte Flüssigkeitstemperatur zu erhalten.

11. Verfahren zur Verteilung von verflüssigtem Wasserstoff, das eine Anlage nach einem der Ansprüche 1 bis 10 verwendet, umfassend einen Schritt des Erzeugens eines Signals (13) zur Anforderung des Füllens eines mobilen Flüssigkeitstanks (6), einen Schritt des Berechnens eines bestimmten Fülldruckniveaus (Pr) in Abhängigkeit von dem Signal und einen Schritt des Füllens des Tanks (6) mit flüssigem Wasserstoff auf das bestimmte Fülldruckniveau (Pr).

12. Verfahren nach Anspruch 11, **dadurch gekennzeichnet, dass** das bestimmte Fülldruckniveau (Pr) bei dem Schritt des Füllens geregelt wird, indem die Öffnung des Druckund/oder Volumenstromregelungsorgans (8) gesteuert wird.

13. Verfahren nach Anspruch 12, **dadurch gekennzeichnet, dass** das Steuern der Öffnung des Druck- und/oder Volumenstromregelungsorgans (8) bei einem Vorgang des Entgasens des Tanks (6) während und/oder vor und/oder nach einem Transfer von flüssigem Wasserstoff in den Tank (6) ausgeführt wird.

14. Verfahren nach einem der Ansprüche 11 bis 13, **dadurch gekennzeichnet, dass** der Schritt des Erzeugens eines Signals (13) zur Anforderung des Füllens manuell und/oder per Telemetrie ausgeführt wird, wobei das Signal an die Anlage (1) übertragen wird.

15. Verfahren nach einem der Ansprüche 11 bis 14, **dadurch gekennzeichnet, dass** es, vor einem Transfer von flüssigem Wasserstoff aus dem Speicher (4) in den Tank (6), einen Schritt des Berechnens eines bestimmten Temperaturwerts (Tl) des produzierten verflüssigten Wasserstoffs in dem Speicher (4) in Abhängigkeit von dem Signal (13) und einen Schritt des Füllens des Speichers (4) mit verflüssigtem Wasserstoff mit der bestimmten Temperatur (Tl) beinhaltet.

16. Verfahren nach einem der Ansprüche 11 bis 15, **dadurch gekennzeichnet, dass** es, vor einem Transfer von flüssigem Wasserstoff aus dem Speicher (4) in den Tank (6), einen Schritt des Füllens von zwei verschiedenen Speichern (4) mit verflüssigtem Wasserstoff mit verschiedenen Temperaturen (Tl1, Tl2) und einen Schritt des Berechnens eines bestimmten Temperaturwerts (Tl) des verflüssigten Wasserstoffs in Abhängigkeit von dem Signal und einen Schritt des Füllens eines Tanks (6) mit der bestimmten Temperatur über ein aus den Speichern (4) kommendes Gemisch aus verflüssigtem Wasserstoff beinhaltet.

## Claims

1. Facility for distributing liquefied hydrogen comprising a source (2) of gaseous hydrogen, a liquefier (3), at least one liquid hydrogen store (4), the liquefier (3) comprising an inlet connected to the source (2) and an outlet connected to an inlet of the store (4) via a liquid circuit (5) so as to store therein liquefied hydrogen produced by the liquefier (3), the facility (1) comprising a liquid filling circuit (12) provided with a first end connected to the store (4) and a second end intended to be removably connected to a first end of a mobile liquid tank (6) to be filled such as a semitrailer, the facility (1) further comprising a gas recovery circuit (7) provided with a first end intended to be removably connected to a second end of said tank (6) and a second end connected to a receiving member of the facility (1), for example an inlet of the liquefier (3), the gas recovery circuit (7) comprising a pressure and/or flow rate regulation member (8), such as a valve making it possible to lower the pressure in the mobile liquid tank (6) to a determined filling pressure (Pr), the facility (1) comprising an electronic control member (10) comprising a microprocessor configured to control all or part of the facility (1), the electronic control member (10) being configured to receive at least one signal (13) requesting filling of a mobile liquid tank (6), the facility (1) being **characterized in that** the pressure and/or flow rate regulation member (8) is adjustable and **in that** the electronic control member (10) is configured to control the latter so as to regulate the pressure level in a mobile liquid tank (6) to a determined filling pressure (Pr) as a function of a filling request signal (13) received.

2. Facility according to Claim 1, **characterized in that** the gas recovery circuit (7) comprises a compression member (11) disposed between the pressure and/or flow rate regulation member (8) and the second end connected to the liquefier, the compression member (11) being configured to compress the flow of gas coming from the first end to a determined pressure with a view to the reinjection thereof into the circuit of the liquefier (3).

3. Facility according to Claim 1 or 2, **characterized in that** the determined filling pressure (Pr) is selected between a determined minimum pressure (Pmini) and a determined maximum pressure (Pmax).

4. Facility according to Claim 3, **characterized in that** the determined minimum pressure (Pmini) is equal to 1.05 bar.

5. Facility according to Claims 2 and 3, **characterized in that** the compression member (11) is configured to operate with a minimum intake pressure at the inlet of said compression member (11), the determined minimum pressure (Pmini) being equal to the minimum intake pressure of the compression member (11) increased by a determined value corresponding at least to the pressure drop in the gas recovery circuit (7) between the first end and the inlet of said compression member (11).

6. Facility according to any one of Claims 3 to 5, **characterized in that** the determined maximum pressure (Pmax) is equal to the value of the pressure within the store (4), potentially reduced by the value of the pressure drop between the store (4) and the second end of the liquid filling circuit (12).

7. Facility according to any one of Claims 1 to 6, **characterized in that** the electronic control member (10) is configured to receive at least one signal (13) requesting filling of a mobile liquid tank (6) comprising at least one of the following filling parameters: maximum pressure level allowed in the tank (6), fluid pressure level required at the reception point(s) to which the tank (6) must deliver liquefied hydrogen after filling, quantity of liquefied hydrogen to be filled in the tank (6), distance that the tank (6) must travel after filling so as to deliver, in turn, liquefied hydrogen to the reception point(s), number of reception points to which the tank (6) must deliver liquefied hydrogen after filling, the temperature in the store (4), the volume of the tank (6); and **in that** the electronic control member (10) is configured to calculate the determined filling pressure level (Pr) as a function of said one or more of said parameters.

8. Facility according to any one of Claims 1 to 7, **characterized in that** the liquefier (3) is of the type with controlled variable cooling power, i.e. making it possible to vary the temperature (Tl) of the liquid hydrogen produced and in particular to produce liquid hydrogen that is sub-cooled relative to its saturated state, and **in that** the electronic control member (10) is configured to control the temperature level of the liquid hydrogen produced in the store (4) as a function of the request signal received.

9. Facility according to Claim 8, **characterized in that** the liquid filling circuit (12) comprises two drawingoff pipes (121, 122) connected at two different heights of the store so as to draw off hydrogen therefrom under different respective thermodynamic conditions.

10. Facility according to Claim 8 or 9, **characterized in that** it has two distinct stores (4) filled at different liquid hydrogen temperatures, the first end of the liquid filling circuit being connected to the stores, the liquid filling circuit comprising a set of valve(s) configured to make it possible to fill a tank (6) with a mixture of liquid coming from the stores (4) so as to obtain a determined liquid temperature.

11. Method for distributing liquefied hydrogen using a facility in accordance with any one of Claims 1 to 10, comprising a step of generating a signal (13) requesting filling of a mobile liquid tank (6), a step of calculating a determined filling pressure level (Pr) as a function of said signal and a step of filling the tank (6) with liquid hydrogen at the determined filling pressure level (Pr).

12. Method according to Claim 11, **characterized in that** the determined filling pressure level (Pr) is regulated during the filling step by controlling the opening of the pressure and/or flow rate regulation member (8).

13. Method according to Claim 12, **characterized in that** the control of the opening of the pressure and/or flow rate regulation member (8) is carried out during an operation of degassing the tank (6) during and/or prior to and/or following a transfer of liquid hydrogen into the tank (6).

14. Method according to any one of Claims 11 to 13, **characterized in that** the step of generating a filling request signal (13) is carried out manually and/or by telemetry, said signal being transmitted to the facility (1) .

15. Method according to any one of Claims 11 to 14, **characterized in that** it involves, prior to a transfer of liquid hydrogen into the tank (6) from the store (4), a step of calculating a determined temperature value (Tl) of liquefied hydrogen produced in the store (4) as a function of said signal (13) and a step of filling the store (4) with liquefied hydrogen at said determined temperature (Tl).

16. Method according to any one of Claims 11 to 15, **characterized in that** it involves, prior to a transfer of liquid hydrogen into the tank (6) from the store (4), a step of filling two distinct stores (4) with liquefied hydrogen at different temperatures (Tl1, Tl2) and a step of calculating a determined liquefied hydrogen temperature value (Tl) as a function of said signal and a step of filling a tank (6) at said determined temperature via a mixture of liquefied hydrogen coming from said stores (4).
